(19) Europäisches Patentamt

European Patent Office

Office européen des brevets

(11) **EP 0 800 097 A2**

(12) **EUROPÄISCHE PATENTANMELDUNG**

(43) Veröffentlichungstag:
08.10.1997 Patentblatt 1997/41

(51) Int. Cl.$^6$: **G02B 3/00**, B32B 17/00

(21) Anmeldenummer: 97104735.2

(22) Anmeldetag: 20.03.1997

(84) Benannte Vertragsstaaten:
**BE CH DE FR GB IT LI NL**

(30) Priorität: **02.04.1996 DE 19613221**

(71) Anmelder: **FRAUNHOFER-GESELLSCHAFT ZUR FÖRDERUNG DER ANGEWANDTEN FORSCHUNG E.V.**
**80636 München (DE)**

(72) Erfinder: **Goetzberger, Adolf, Prof.-Dr.**
**79249 Merzhausen (DE)**

(54) **Sonnenschutzverglasung**

(57) Die Erfindung betrifft eine Sonnenschutzverglasung zur Abschattung von direktem Sonnenlicht ohne bewegliche Teile, wobei eine transparente Platte auf der der Sonne zugewandten Oberfläche flächendeckend mit Linsenstrukturen bedeckt ist, deren Brennebene weitgehend hinter dieser transparenten Platte liegt und wobei hinter der transparenten Platte eine ebene Schicht eines thermotropen Mediums angeordnet ist, dergestalt, daß die Brennebene der Linsen weitgehend in der thermotropen Schicht liegt.

EP 0 800 097 A2

## Beschreibung

### Stand der Technik

Die Erfindung betrifft eine neuartige Sonnenschutzverglasung. Fenster und andere Verglasungen dienen der Tageslichtbeleuchtung von Innenräumen. Direktes Sonnenlicht ist jedoch in den meisten Fällen nicht erwünscht, da es zu Überhitzung, Blendung und Ausbleichen von Farben führt. Traditionell werden auf der Südseite von Gebäuden Dachüberstände sowie bei Fenstern bewegliche Elemente wie Jalousien, Rollos und Vorhänge benützt. Diese müssen manuell oder automatisch bewegt werden und bereiten wegen der Mechanik Zuverlässigkeitsprobleme und sind wartungsaufwendig. In den letzten Jahren sind neuere Techniken entwickelt worden. Reflektierende Profile, totalreflektierende Prismen und Hologramme wurden angewandt. Der jetzige Stand der Technik ist in OTTI: Innovative Lichttechnik in der Architektur, 1994 beschrieben. Auch die neuen Techniken gestatten nur eine Kontrolle des direkten Sonnenlichts, wenn sie dem Sonnenstand mechanisch nachgeführt werden. Das trifft insbesondere auf östlich oder westlich sowie horizontale Verglasungen zu. In allen Fällen wird ein großer Teil des Himmels ausgeblendet und dadurch die Beleuchtung stark eingeschränkt. Bei den konventionellen Methoden wird sogar der Raum weitgehend abgedunkelt.

### Beschreibung der Erfindung

Die hier beschriebene Erfindung unterscheidet sich von allen bisher bekannten Lösungen dadurch, daß sie folgende Vorteile gleichzeitig in sich vereinigt:

• Sonnenschutz ohne bewegte Teile durch einen rein passiven Effekt
• Durchlässigkeit für alles diffuse Licht außerhalb eines engen Bereichs um die Sonnenscheibe
• Anwendbarkeit in beliebigen Orientierungen, d. h. nicht nur für Südorientierung sondern auch für östlich und westlich ausgerichtete sowie für horizontale Verglasungen.

Das wesentliche Problem, das bei der Lösung der Aufgabe der Abschattung des direkten Sonnenlichts auftritt, liegt darin, daß die Sonne im Laufe des Tages und des Jahres einen großen Teil des Himmels durchläuft, so daß eine permanente Ausblendung dieses Bereichs durch optische Maßnahmen auch fast alles diffuse Himmelslicht, und das auch bei bewölktem Himmel ausschließen würde. Einzig bei optimal zur Sonne nach Süden ausgerichteten Flächen ist der auszublendende Bereich auf einen Streifen von ± 23,4° um die Senkrechte begrenzt. Bei senkrechten Fenstern müßten hingegen fast alle Richtungen ausgeblendet werden. Wenn man das direkte Licht mit Linsen fokussiert, wie in dieser Erfindung beschrieben, dann hat man das Problem, daß sich der Brennpunkt paralleler, von der Sonne kommender Strahlen auf einer sphärischen Ebene hinter der Linsenstruktur bewegt und dabei ebenfalls fast die gesamte Fläche der Verglasung ausfüllt. Es ergibt sich also die Aufgabe, einen mit dem Brennpunkt der Strahlung wandernden Reflektor so zu realisieren, daß damit keine mechanische Bewegung verbunden ist.

Die Erfindung beruht auf zwei Elementen, einer transparenten Scheibe, die auf der Vorderseite flächendeckende Linsenstrukturen aufweist und einer dahinterliegenden Schicht, die aus thermotropem Material besteht. Thermotrope Materialien zeichnen sich dadurch aus, daß sie ihre optischen Eigenschaften in Abhängigkeit von der Temperatur ändern. Die hier eingesetzten Materialien haben die Eigenschaft, bei niedrigen Temperaturen transparent zu sein und bei einer durch die Materialzusammensetzung einstellbaren Temperatur undurchsichtig zu werden. Dieser Effekt kommt dadurch zustande, daß die Schicht aus zwei Phasen besteht, die bei tieferer Temperatur ineinander löslich sind und bei Überschreiten der Schalttemperatur in zwei getrennte Phasen mit verschiedenen Brechungsindizes zerfallen. Dadurch wird das Material lichtstreuend, es erscheint nach außen weiß. Eine Übersicht über den Stand der Technik bei diesen Materialien gibt H. R. Wilson (SPIE Proc. Optical Materials Technology for Energy Efficiency and Solar Energy Conversion XIII, Volume 2255, 1994, *p. 214*). und (H.R. Wilson et al., Proc. Windows Innovations Conference, Toronto, Canada, 1995, p.489). Da thermotrope Materialien Flüssigkeiten sind, werden sie als Schicht zwischen zwei Plastikfolien oder auch Glasscheiben eingesetzt. Solche thermotrope Schichten können für sich alleine als Überhitzungsschutz hinter Verglasungen eingesetzt werden, da sie ja bei Überschreiten der Schalttemperatur lichtundurchlässig werden. Sie wirken in dieser Weise wie mechanische Verschattungseinrichtungen, d. h. nach dem Umschalten wird praktisch kein Licht mehr durchgelassen, brauchen aber keine mechanisch bewegten Teile.

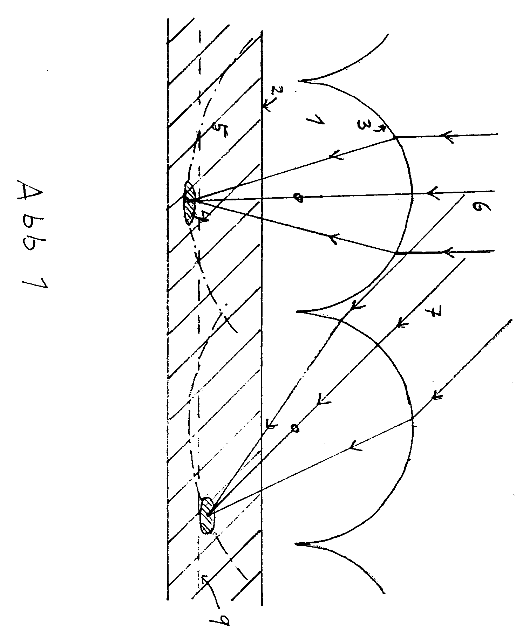

Die Erfindung ist im Schnitt in Abb. 1 dargestellt: Eine obere Abdeckung 1 besteht aus transparentem Material wie Glas oder PMMA. Sie hat eine ebene Rückseite 2. Auf der vorderen, der Sonne zugewandten Seite sind Linsenstrukturen 3 eingeprägt. Der Brennpunkt 4 der Linsenstrukturen liegt hinter der Begrenzungsfläche 2 innerhalb einer Schicht thermotropen Materials 5. Der Abschattungseffekt entsteht nun dadurch, daß sich das thermotrope Medium im Brennpunkt lokal erwärmt, so daß dort die Schalttemperatur überschritten wird und damit eine lichtstreuende Zone entsteht. Diese wirkt wie ein diffuser Reflektor und wirft das gesammelte direkte Licht wieder zurück. Somit ist bis auf die kleine Fläche der Brennpunkte immer fast die gesamte Fläche der Verglasung durchsichtig und erhellt den dahinter liegenden Raum. Wenn sich der Sonnenstand ändert, wandert die Reflexionszone im Thermotropen Medium weiter. In Abb. 1 sind die Abbildungsverhältnisse für senkrechten Lichteinfall 6 und für unter 45° einfallende Strahlung 7 eingezeichnet.

Die optische Theorie ergibt für die Entfernung L des Brennpunkts hinter dem Scheitelpunkt der Linse:

$$L = r( 1 + 1/(\sqrt{n^2} - 1))$$

Für einen Brechungsindex 1,5 des Linsenmaterials ergibt sich der Radius der Brennpunktfläche zu 1,89 r. Da die meisten verwendbaren thermotropen Medien Wasser enthalten, ist ihr Brechungsindex etwas niedriger als 1,5, so daß der Radius etwas größer wird. Die in Abb. gezeichneten Linsen können dreidimensional sphärische Linsen sein oder auch Zylinderlinsen. Im ersten Fall bewegt sich der Brennpunkt 4 auf einer Kugelkalotte, im zweiten auf einer Zylinderfläche. Dreidimensionale Linsen haben einen schärfer begrenzten Brennpunkt, haben aber den Nachteil, daß runde Linsen eine Ebene nicht voll bedecken können. Die beste Annäherung an eine volle Bedeckung erzielt man mit einer hexagonal flächendeckenden Anordnung. Auch Fresnellinsen sind möglich. Diese haben den Vorteil der geringen Schichtdicke, leiden aber darunter, daß ihre Linsenwirkung nur bei senkrechtem Lichteinfall optimal ist.

Die die Linsen enthaltende Platte kann auch als die vordere Begrenzung des thermotropen Mediums verwandt werden. Unter Umständen ist auch eine Trennung von Linsenstruktur und thermotropem Medium durch einen Luftzwischenraum wünschenswert, wenn z.B. bessere Wärmedämmung angestrebt wird.

Es ist bekannt, daß sphärische Linsen aufgrund von Linsenfehlern keinen scharfen Brennpunkt aufweisen. Dieser Effekt ist hier nicht nachteilig, da das Licht nur insoweit konzentriert werden muß, daß lokale Erwärmung auftritt. In den meisten Medien ist der Brechungsindex für Infrarotstrahlung niedriger als für sichtbares Licht. Gleichzeitig ist die Absorption dieses Spektralbereichs im thermotropen Medium relativ hoch. Dies hat den Vorteil, daß die Erwärmung und damit die Bildung der streuenden Zone etwas vor dem Brennpunkt für sichtbares Licht auftritt und damit die Lichtreflexion optimal wird. Um diesen Effekt zu verstärken ist es möglich, das thermotrope Material mit speziellen IR-Absorbern zu dotieren, die natürlich im sichtbaren Bereich transparent sein müssen.

Die Wirkung der Fokussierung ist am stärksten bei senkrechtem Lichteinfall. Bei sehr flachen Winkeln der Sonnenstrahlung wird die auf die einzelnen Linsen entfallenden Energie mit dem Kosinus des Auftreffwinkels reduziert und außerdem wandert der Brennpunkt aus dem transparenten Medium heraus. Dieses Verhalten ist im Sinne des beabsichtigten Effekts positiv, denn damit ist gewährleistet, daß starke Strahlung mit Sicherheit abgeschattet wird, während bei schwächer werdender Strahlung mehr Licht hindurchgelassen wird. Durch die Linsenstrukturen wird auch erreicht, daß das durchgehende Sonnenlicht nicht als direkte Strahlung, sondern gestreut in den Raum eintritt.

Die beschriebene Funktion einer thermotropen Schicht als Überhitzungsschutz kann mit der erfindungsgemäßen Vorrichtung kombiniert werden, indem man die Schalttemperatur so wählt, daß die Schicht bei Erreichen der höchstzulässigen internen Lufttemperatur umschaltet.

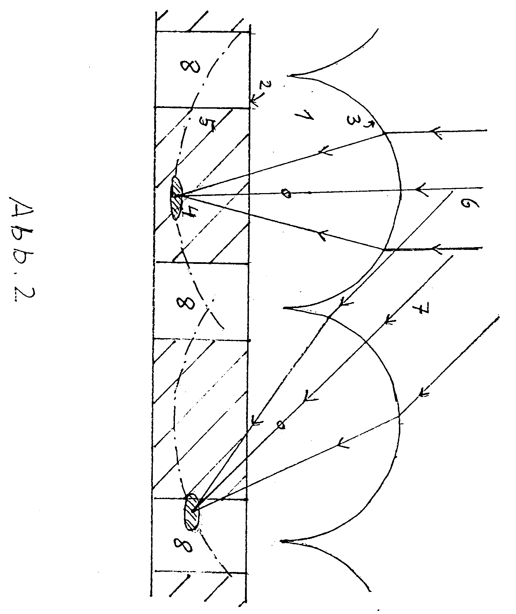

In Abb. 2 ist eine weitere Ausgestaltung der Erfindung gezeigt: Durch Unterteilung der an die Linsenstruktur anschließenden Schicht in Streifen, die zwischen thermotropem Material 5 und transparentem Material 8 abwechseln, läßt sich eine jahreszeitlich unterschiedliche Kontrolle der Lichtdurchlässigkeit erreichen. Oft wird angestrebt, die Sonnenstrahlung nur im Sommer auszuschließen, sie aber in der Heizperiode zur passiven Solarenergieheizung zu nutzen. Durch richtige Plazierung der transparenten Steifen kann man die Abschattung auf bestimmte Einfallsrichtungen begrenzen. Das funktioniert allerdings nur bei Zylinderlinsen oder linear angeordneten sphärischen Linsen. Alternativ ist es auch möglich, die Anordnung so zu dimensionieren, daß *ein kleiner Bereich der Brennfläche um die Scheitelfläche herum* außerhalb des thermotropen Mediums zu liegen kommt. Dies ist durch die gestrichelte Linie 9 in Abb. 1 angedeutet. *Linie 9 ist dann als die untere Begrenzung der thermotropen Schicht zu verstehen.* Dann werden die senkrecht auftreffenden Strahlen transmittiert. *Eine weitere Möglichkeit der jahreszeitlichen Steuerung ist dadurch gegeben, daß* die flachen Eintrittswinkel, wie aus Abb. 1 ersichtlich, nicht mehr in das thermotrope Medium fallen. Auch dieser Effekt läßt sich durch die Lage der Grenzfläche 2 beeinflussen.

Die Linsenstrukturen sind als äußere Verglasung wenig geeignet, da sie leicht verschmutzen können und schwer zu reinigen sind. Somit ist es naheliegend, sie mit einer äußeren, ebenen Verglasung abzudecken, die an den Rändern hermetisch abgeschlossen ist, um Eindringen von Staub und Wasser zu verhindern.

**Patentansprüche**

1. Sonnenschutzverglasung zur Abschattung von direktem Sonnenlicht ohne bewegliche Teile, dadurch gekennzeichnet, daß eine transparente Platte auf der der Sonne zugewandten Oberfläche flächendeckend mit Linsenstrukturen bedeckt ist, deren Brennebene weitgehend hinter dieser transparenten Platte liegt und daß hinter der transparenten Platte eine ebene Schicht eines thermotropen Mediums angeordnet ist, dergestalt, daß die Brennebene der Linsen weitgehend in der thermotropen Schicht liegt.

2. Sonnenschutzverglasung nach Anspruch 1, dadurch gekennzeichnet, daß die Linsenstrukturen sphärische, dreidimensionale Linsen sind.

3. Sonnenschutzverglasung nach Anspruch 1, dadurch gekennzeichnet, daß die Linsenstrukturen Zylinderlinsen sind.

4. Sonnenschutzverglasung nach Anspruch 1, dadurch gekennzeichnet, daß die Linsenstrukturen Fresnellinsen sind.

5. Sonnenschutzverglasung nach Anspruch 1-2, dadurch gekennzeichnet, daß die sphärischen Linsen in einer hexagonal dichtesten Flächenpackung angeordnet sind.

6. Sonnenschutzverglasung nach Anspruch 1-4, dadurch gekennzeichnet, daß die Schalttemperatur des thermotropen Mediums so gewählt wird, daß diese in ihrer ganzen Fläche als Überhitzungsschutz für den dahinterliegenden Raum wirkt.

7. Sonnenschutzverglasung nach Anspruch 1-6, dadurch gekennzeichnet, daß die die Linsen enthaltende Platte und die thermotrope Schicht durch einen Zwischenraum getrennt sind.

8. Sonnenschutzverglasung nach Anspruch 1-4, dadurch gekennzeichnet, daß die thermotrope Schicht durch periodische Streifen aus inertem transparentem Material unterbrochen ist, dergestalt, daß die Sonnenstrahlung nur zu bestimmten Jahreszeiten abgeschattet wird.

9. Sonnenschutzverglasung nach Anspruch 1-6, dadurch gekennzeichnet, daß die jahreszeitliche Regelung dadurch erreicht wird, daß *ein kleiner Bereich* der Brennpunktflächen der Linsen *um den Scheitelpunkt herum* hinter die thermotrope Schicht fällt oder *daß* die Brennfläche für flache Einfallswinkel der Sonnenstrahlung in die Linsenplatte fällt.

10. Sonnenschutzverglasung nach Anspruch 1-9, dadurch gekennzeichnet, daß die thermotrope Schicht mit einem im nahen Infrarot absorbierenden Stoff dotiert ist.

11. Sonnenschutzverglasung nach Anspruch 1-10, dadurch gekennzeichnet, daß die Platte mit den Linsenstrukturen nach außen durch eine ebene transparente Platte abgedeckt wird und daß beide durch einen hermetischen Randverbund verbunden sind.

Abb. 2